# EUROPÄISCHE PATENTANMELDUNG

(11) **EP 1 537 972 A2**
(43) Veröffentlichungstag der Anmeldung: **08.06.2005**
(21) Anmeldenummer: 04103949.6
(22) Anmeldetag: 18.08.2004
(51) Int. Cl.: B29C 47/82

(54) **Temperierung für eine Kunststoffverarbeitungsanlage**

(30) Priorität: 28.11.2003 DE 10356350
(71) Anmelder: Battenfeld Extrusionstechnik GmbH, 32547 Bad Oeynhausen (DE)
(72) Erfinder: Roth, Michael, 32549, Bad Oeynhausen (DE); Brandt, Rolf, 32257, Bünde (DE)

(57) **Zusammenfassung**

Die Erfindung betrifft eine Temperierung für eine Kunststoffverarbeitungsanlage, wobei die Kunststoffverarbeitungsanlage mindestens einen Mantel (1) umfasst, in dem eine angetriebene Schnecke oder Spindel angeordnet ist und im Mantel (1) mindestens ein Kanal (2) vorgesehen ist, der zur Aufnahme eines Temperiermediums geeignet ist.

Erfindungsgemäß ist vorgesehen, dass an der Außenseite (3) des Mantels (1) als zusätzliche Temperierung mindestens ein Heizelement (4) angeordnet ist.

Weiterhin betrifft die Erfindung ein Verfahren zum Temperieren einer Kunststoffverarbeitungsanlage, bei der über mindestens einen Kanal (2) eines eine Schnecke umgebenden Mantels (1) ein Temperiermedium zugeführt wird, wobei mittels eines Heizelementes (4) dem Mantel (1) Wärme zugeführt wird und über das in den mindestens einen Kanal (2) des Mantels (1) zugeführte Temperiermedium zusätzlich Wärme zuführoder abführbar ist.

Die Erfindung eignet sich besonders zum Einsatz in einer Kunststoffverarbeitungsanlage bestehend aus einem zweistufigen Extruder, wobei die erste Stufe ein Planetwalzenextruder und die zweite Stufe ein Planetwalzenextruder oder eine Austragschnecke ist, wobei die Temperierung des Walzenteils (5) im Planetwalzenextruder und die Temperierung im Zylinder der Austragschnecke gemäß Anspruch 1 ausgeführt ist.

## Beschreibung

Die Erfindung betrifft eine Temperierung für eine Kunststoffverarbeitungsanlage, wobei die Kunststoffverarbeitungsanlage mindestens einen Mantel umfasst, in dem eine angetriebene Schnecke oder Spindel angeordnet ist und im Mantel mindestens ein Kanal vorgesehen ist, der zur Aufnahme eines Temperiermediums geeignet ist. Weiterhin betrifft die Erfindung ein diesbezügliches Verfahren.

Für das System Planetwalzenextruder sind verschiedene Temperierungsvarianten bekannt. Besonders für das System Planetwalzenextruder ist eine effektive Temperierung wichtig, weil der Planetwalzenextruder eine hohe Oberflächenerneuerung aufweist und als einer der wenigen Extruder einen echten Wärmeaustausch ermöglicht. Bei einem Planetwalzenextruder werden typischerweise eine oder mehrere Zonen am Walzenzylinder und die Hauptspindel temperiert.

Für die Walzenzylinder existieren folgende Systeme:
- Kombination aus Luftkühlung und elektrischer Beheizung
- Temperierkanäle im Walzenteil, die medienbeheizt werden (Öl oder Wasser), wobei jeweils die Medien auf Solltemperatur gebracht werden und durch das Walzenteil geleitet werden.

Letztere haben sich besonders in den letzten Jahren durchgesetzt.

Aus Kostengründen werden dabei häufig 1000 mm lange Walzenteilabschnitte zusammengefasst, was selbstverständlich nachteilig für den Gesamtprozeß ist.

Bekannterweise ist die Effizienz der Luftkühlung gering, weil die Wärmeleitfähigkeit der Luft im allgemeinen und besonders gegenüber Öl und Wasser sehr gering ist.

Öltemperierung ist faktisch nur einsetzbar bei Solltemperaturen größer 100°C und somit für viele Kühl- oder Wärmeabführaufgaben nicht empfehlenswert. Die Obergrenze für Öltemperierung liegt bei ca. 250-300°C, weil sich Öl bei höheren Temperaturen zersetzt.

Wasser ist hervorragend für Solltemperaturen unter 100°C und somit für Kühlaufgaben geeignet. Temperaturen über 160°C sind wegen der enormen Dampfdrücke nur eingeschränkt mit hohem technischem Aufwand nutzbar. Über 250°C stehen Kosten und Nutzen in keinem vernünftigen Verhältnis mehr. In allen Temperaturbereichen wird bei der Wassertemperierung nicht die Verdampfungsenthalpie genutzt, wobei die Verdampfungswärme den höchsten Energietransport ermöglicht. Es wird ausschließlich die spez. Wärme von 4,19kJ/kg*K genutzt. Nachteilig ist ebenfalls, dass bei Medientemperierung die Temperaturerfassung des Temperiermediums in der Regel im Temperiergerät stattfindet und nicht, wie sinnvoll am Prozessteil (hier Walzenteil). Über mehr oder minder lange Wege vom Temperiergerät zum Walzenteil findet ein mitunter nicht unerheblicher Energieverlust an den Rohrleitungen und zu installierenden Pumpleistungen statt.

**Aufgabe** der Erfindung ist es, eine Temperierung sowie ein Verfahren zur Temperierung für eine Kunststoffverarbeitungsanlage anzubieten, die/das die Vorteile der bekannten Systeme kombiniert und die vorherrschenden Nachteile kompensiert, wobei ein erhöhtes Kosten/Leistungsverhältnis erreicht werden soll.

Die **Lösung** der Aufgabe bezüglich der Vorrichtung ist in Verbindung mit dem Oberbegriff des Anspruches 1 dadurch gekennzeichnet, dass an der Außenseite (3) des Mantels (1) als zusätzliche Temperierung mindestens ein Heizelement (4) angeordnet ist. Hierdurch wird die Möglichkeit geschaffen, eine effektive Temperierung vorzunehmen, denn über das Heizelement (4), es können auch mehrere angeordnet sein, kann die gewünschte zuzuführende Wärme relativ leicht bestimmt werden und über die bereits bekannten Kanäle im Mantel zusätzlich Wärme in das System eingebracht werden, aber, und das ist der große Vorteil, auch Wärme entzogen werden. Dies wird erreicht, indem das Temperiermedium eben kein Heiz- sondern ein Kühlmedium ist, also beispielsweise kaltes Wasser eingebracht wird. Der gesamte Prozeß ist somit leichter beeinflußbar und somit auch regel- und /oder steuerbar.

Weiterbildungsgemäß ist vorgesehen, dass der Mantel (1) ein Walzenteil (5) eines Planetwalzenextruders oder bei einem zweistufigen Extruder ein Zylinder einer Austragschnecke ist. Wird als zweistufiger Extruder ein Planetwalzenextruder /Planetwalzenextruderkombination eingesetzt, ist diese Temperierung selbstverständlich bei beiden Planetwalzenextrudern sinnvoll.

Vorteilhafterweise wird als Temperiermedium Wasser eingesetzt, es ist aber auch denkbar, bei bestimmten Einsätzen Öl zu verwenden, die entsprechenden Nachteile wurden jedoch schon eingangs beschrieben.

Diese Temperierung eignet sich besonders bei einer kaskadenförmigen Anordnung einer Kunststoffverarbeitungsanlage bestehend aus einem zweistufigen Extruder, wobei die erste Stufe ein Planetwalzenextruder und die zweite Stufe ein Planetwalzenextruder oder eine Austragschnekke ist. Erfindungsgemäß ist dann vorgesehen, dass die Temperierung des Walzenteils (5) im Planetwalzenextruder und die Temperierung im Zylinder der Austragschnecke gemäß Anspruch 1 ausgeführt ist.

Das erfindungsgemäße Verfahren zum Temperieren einer Kunststoffverarbeitungsanlage, bei der über mindestens einen Kanal (2) eines eine Schnecke umgebenden Mantels (1) ein Temperiermedium zugeführt wird, ist dadurch gekennzeichnet, dass mittels eines Heizelementes (4) dem Mantel (1) Wärme zugeführt wird und über das in den mindestens einen Kanal (2) des Mantels (1) zugeführte Temperiermedium zusätzlich Wärme zuführ- oder abführbar ist.

Selbstverständlich sollte die Temperatur im Inneren des Mantels (1) über eine Steuerung und/oder Regelung der Mittel des Heizelementes und/oder der Temperatur des Temperiermediums beeinflußbar sein.

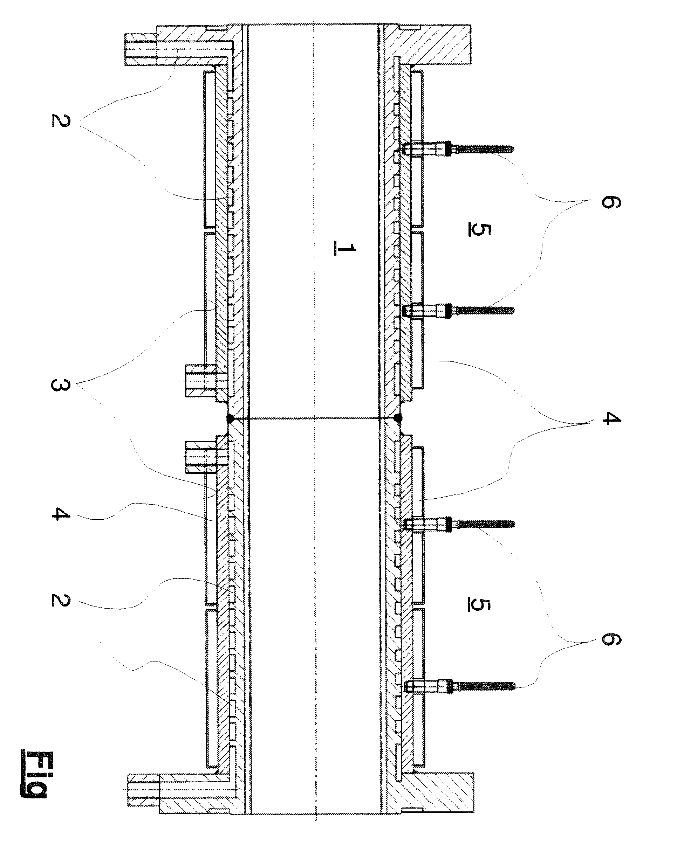

In der Zeichnung sind beispielhaft zwei Walzenteile 5 eines Planetwalzenextruders dargestellt. Sie zeigt zwei Walzenteile als Mantel 1 in der Schnittdarstellung, in der der Kanal 2 zur Aufnahme des Temperiermediums erkennbar ist. Auf der Außenseite 4 der Walzenteile 5 sind Heizelemente 4 angeordnet, die über die Anschlüsse 6 mit einer Steuerung in Verbindung stehen.

Die Temperaturmessung jeder Zone findet direkt am Walzenteil statt. Wie aus der Figur zu ersehen ist, wird der Mantel 1 des Walzenteils 5 oder ggf. des Austragzylinders der 2.ten Stufe von außen elektrisch beheizt. Somit ist erreicht, dass die Beheizung von außen für die Maschine mit weitaus höheren Temperaturen möglich ist. Bei entsprechender Leistungsdichte der Heizbänder sind mit vertretbarem technischem Aufwand Temperaturen von deutlich über 300-350°C realisierbar.

Die Kühlung wird über Wasser realisiert, welches in die Temperierkanäle 2 eingespeist wird.

Dabei sind zwei Betriebszustände zu unterscheiden:
1.) Bei Sollwerten am Zylinder über ca. 100°C wird vortemperiertes demineralisiertes Wasser im Temperierkanaleintritt kurz eingespeist. Eine kleine Portion Wasser wird an der inneren Oberfläche des Walzenteiltemperierkanals erwärmt und erreicht die Verdampfungstemperatur, bei deren Überschreitung die Verdampfungsenthalpie zur Kühlung der Oberfläche genutzt wird. Der Dampf wird quasi drucklos zum Ende des Walzenteilabschnitts geführt. In einer geeigneten Prozesskette wird der Dampf extern kondensiert und das Wasser wieder in den Prozesskreislauf eingespeist.
2.) Bei Sollwerten am Zylinder unter ca. 100°C wird das Wasser in der max. Menge über die Temperierkanäle transportiert und so eine effektive Kühlung des Walzenteils ermöglicht.

Die Vorteile des neuen Systems sind:
- sehr hohe Temperaturen (bis ca. 500°C) am Zylinder sind einfach realisierbar
- Temperaturerfassung am Zylinder
- Nutzung der Verdampfungsenthalpie zur Kühlung in Hochtemperaturanwendungen
- Effektive Kühlung in Niedertemperaturanwendungen
- quasi drucklose Temperierkreisläufe
- einfache und kostengünstige Aufteilung des Walzenzylinders in mehrere Temperierzonen
- geringere Energieverluste

### Bezugszeichenliste:

- 1: Mantel
- 2: Kanal im Mantel 1
- 3: Außenseite des Mantels 1
- 4: Heizelement
- 5: Walzenteil
- 6: Anschluß am Heizelement 4

## Patentansprüche

1. Temperierung für eine Kunststoffverarbeitungsanlage, wobei die Kunststoffverarbeitungsanlage mindestens einen Mantel (1) umfasst, in dem eine angetriebene Schnecke oder Spindel angeordnet ist und im Mantel (1) mindestens ein Kanal (2) vorgesehen ist, der zur Aufnahme eines Temperiermediums geeignet ist,
**dadurch gekennzeichnet, dass**
an der Außenseite (3) des Mantels (1) als zusätzliche Temperierung mindestens ein Heizelement (4) angeordnet ist.

2. Temperierung nach Anspruch 1, **dadurch gekennzeichnet, dass** der Mantel (1) ein Walzenteil (5) eines Planetwalzenextruders ist.

3. Temperierung nach Anspruch 1, **dadurch gekennzeichnet, dass** der Mantel (1) ein Zylinder einer Austragschnecke eines zweistufigen Extruders ist.

4. Temperierung nach Anspruch 1 bis 3, **dadurch gekennzeichnet, dass** das Temperiermedium Wasser ist.

5. Kunststoffverarbeitungsanlage bestehend aus einem zweistufigen Extruder,
wobei die erste Stufe ein Planetwalzenextruder und
die zweite Stufe ein Planetwalzenextruder oder eine Austragschnecke ist,
**dadurch gekennzeichnet, dass**
das die Temperierung des Walzenteils (5) im Planetwalzenextruder und die Temperierung im Zylinder der Austragschnecke gemäß Anspruch 1 ausgeführt ist.

6. Verfahren zum Temperieren einer Kunststoffverarbeitungsanlage, bei der über mindestens einen Kanal (2) eines eine Schnecke umgebenden Mantels (1) ein Temperiermedium zugeführt wird,
**dadurch gekennzeichnet, dass**
mittels eines Heizelementes (4) dem Mantel (1) Wärme zugeführt wird und
über das in den mindestens einen Kanal (2) des Mantels (1) zugeführte Temperiermedium zusätzlich Wärme zuführ- oder abführbar ist.

7. Verfahren nach Anspruch 6, **dadurch gekennzeichnet, dass** die Temperatur im Inneren des Mantels (1) über eine Steuerung und/oder Regelung der Mittel des Heizelementes und/oder der Temperatur des Temperiermediums beeinflußbar ist.
